(19) Europäisches Patentamt
European Patent Office
Office européen des brevets

(11) **EP 2 018 308 B1**

(12) **FASCICULE DE BREVET EUROPEEN**

(45) Date de publication et mention
de la délivrance du brevet:
**22.02.2012 Bulletin 2012/08**

(51) Int Cl.:
***B62D 5/04*** *(2006.01)*

(21) Numéro de dépôt: **07766000.9**

(22) Date de dépôt: **04.05.2007**

(86) Numéro de dépôt international:
**PCT/FR2007/051220**

(87) Numéro de publication internationale:
**WO 2007/132109 (22.11.2007 Gazette 2007/47)**

(54) **SYSTEME DE DIRECTION ASSISTEE ELECTRIQUE DE VEHICULE AUTOMOBILE**

ELEKTRISCHES SERVOLENKSYSTEM FÜR EIN KRAFTFAHRZEUG

ELECTRICAL POWER STEERING SYSTEM FOR A MOTOR VEHICLE

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **16.05.2006 FR 0604349**

(43) Date de publication de la demande:
**28.01.2009 Bulletin 2009/05**

(73) Titulaire: **Renault s.a.s.
92100 Boulogne Billancourt (FR)**

(72) Inventeurs:
• **COTTARD, Philippe
F-92500 Rueil-malmaison (FR)**
• **MARTINEZ, Didier
F-27920 Saint-etienne-sous-bailleul (FR)**

(56) Documents cités:
**WO-A-2005/085041     DE-A1- 19 919 374
FR-A1- 2 814 423**

**Description**

La présente invention porte sur un système et un procédé de direction assistée électrique de véhicule automobile.

De façon classique, les véhicules automobiles sont pourvus d'un châssis, d'un habitacle, et de roues reliées au châssis par un mécanisme de suspension avec des roues avant directrices commandées par un volant à disposition du conducteur dans l'habitacle du véhicule.

Entre le volant et les roues, est prévue une colonne de direction solidaire en rotation du volant, dont l'extrémité inférieure est pourvue d'un pignon agissant sur une crémaillère permettant de faire tourner les roues autour d'un axe sensiblement vertical, afin d'assurer leur orientation et la rotation du châssis du véhicule.

De tels mécanismes de direction peuvent être pourvus d'une assistance électrique permettant de réduire les efforts du conducteur, en particulier lors de manoeuvres à l'arrêt, par exemple une manoeuvre de stationnement.

Des mécanismes comprennent généralement un actionneur de crémaillère disposé sur la colonne de direction entre le volant et la crémaillère, et un capteur de mesure du couple appliqué par le conducteur sur le volant disposé sur la colonne de direction entre l'actionneur et le volant.

Le document FR 2 814 423 porte sur un procédé de détermination d'un couple d'assistance devant être fourni par un moteur électrique d'un système de direction assistée. Le couple d'assistance est obtenu en multipliant le couple conducteur par un gain d'assistance dépendant du couple conducteur et de la vitesse du véhicule.

Le document WO2005/085041 divulgue un système et un procédé de direction assistée avec un capteur de torsion en accord avec le préambule de la revendication 1.

De tels systèmes ne tiennent pas compte des problèmes de résonance mécanique du système.

En effet, le couplage d'une direction assistée électrique avec le train avant d'un véhicule, constitue un système électromécanique ayant deux résonances mécaniques principales.

Chacune de ces deux résonances principales est caractérisée par une fréquence (fréquence de résonance), un amortissement (coefficient de surtension à la résonance), et une déformée modale.

La déformée modale peut être perçue comme l'image du déplacement géométrique de tous les points vibrants en phase à la fréquence de résonance considérée.

A ces fréquences de résonance, la stabilité du système est fortement dégradée, ce qui provoque, en pratique, des oscillations du système.

Il existe des systèmes qui diminuent le gain de l'asservissement pour réduire la bande passante du système bouclé par rapport aux fréquences de ces deux modes de résonances principales. Cependant, une telle réduction du gain du système bouclé génère une baisse sensible des performances lorsqu'on atteint l'une de ces deux résonances principales.

D'autres systèmes réduisent localement en fréquence le gain de l'asservissement par filtrage. De tels systèmes diminuent nettement les performances de régulation de l'asservissement aux fréquences des deux résonances principales.

Aussi, un but de l'invention, est de gérer le contrôle de ces deux résonances principales, sans diminuer les performances du système de direction assistée électrique lorsqu'on atteint un mode de fonctionnement à l'une de ces deux résonances principales.

Ainsi, selon un aspect de l'invention, il est proposé un système de direction assistée électrique de véhicule automobile, comprenant un actionneur de crémaillère et un capteur de mesure du couple appliqué par le conducteur sur le volant, disposés sur la colonne de direction, respectivement entre le volant et la crémaillère, et entre l'actionneur et le volant. Le système comprend des moyens d'élaboration d'un couple d'assistance final de la direction assistée électrique adapté pour simuler une localisation identique de l'actionneur de crémaillère et du capteur de mesure de couple sur la colonne de direction, de façon qu'aux deux fréquences principales de résonance mécanique du système, la phase du diagramme de Bode représentant le fonctionnement du système est sensiblement nulle.

Un tel filtrage permet d'atteindre, aux fréquences de résonance, une phase sensiblement nulle du diagramme de Bode représentant le fonctionnement du système, et ainsi simuler une localisation identique de l'actionneur de crémaillère et du capteur de mesure de couple sur la colonne de direction, et ainsi éviter les oscillations du système à ces fréquences de résonance, sans dégradation des performances du système.

Le couple d'assistance final de la direction assistée électrique, est le couple transmis à la colonne de direction par l'actionneur.

Selon un mode de réalisation, le système comprend des moyens d'estimation d'un couple d'assistance initial prédéterminé et d'un gain d'assistance prédéterminé, en fonction de la mesure du couple appliqué par le conducteur sur le volant.

Par exemple, le couple d'assistance initial prédéterminé est calculé au moyen d'une fonction mathématique prédéterminée, ou d'une cartographie embarquée. Le gain d'assistance prédéterminé correspond à la valeur de la pente du couple d'assistance initiale en fonction de la mesure du couple appliquée par le conducteur sur le volant.

Selon un mode de réalisation, lesdits moyens d'élaboration comprennent des premiers moyens de filtrage du couple d'assistance initial en fonction du gain d'assistance.

Selon un mode de réalisation, lesdits moyens d'élaboration comprennent des deuxièmes moyens de filtrage de la mesure du couple appliqué par le conducteur sur le volant.

Selon un mode de réalisation, lesdits moyens d'élaboration comprennent des moyens d'addition des signaux de sortie des premiers et deuxièmes moyens de filtrage, pour délivrer ledit couple d'assistance final en sortie desdits moyens d'élaboration.

Selon un mode de réalisation, ledit actionneur comprenant un moteur électrique, ledit système comprend, en outre, des moyens de transformation dudit couple d'assistance final en une commande correspondante de courant d'alimentation du moteur électrique.

Selon un mode de réalisation, lesdits premiers moyens de filtrage de type passe-bas sont adapté pour appliquer un retard de phase de sensiblement $\pi/4$ radian à la première fréquence principale de résonance mécanique du système.

Selon un mode de réalisation, lesdits deuxièmes moyens de filtrage de type passe-haut sont adaptés pour appliquer une avance de phase de sensiblement $\pi/4$ radian à la deuxième fréquence principale de résonance mécanique du système.

Selon un autre aspect de l'invention, il est également proposé un procédé de gestion d'une direction assistée électrique de véhicule automobile, dans lequel on élabore un couple d'assistance de la direction assistée électrique adapté pour simuler une localisation identique d'un actionneur de crémaillère et d'un capteur de mesure de couple disposés sur la colonne de direction, de façon qu'aux deux fréquences principales de résonance mécanique du système, la phase du diagramme de Bode représentant le fonctionnement du système est sensiblement nulle.

D'autres buts, caractéristiques et avantages de l'invention apparaîtront à la lecture de la description suivante, de quelques exemples nullement limitatifs, et faite en référence aux dessins annexés, sur lesquels :

- la figure 1 illustre un mode de réalisation d'un système selon un mode de réalisation de l'invention ; et
- la figure 2 illustre un module d'élaboration d'un couple d'assistance final de la direction assistée électrique selon un aspect de l'invention.

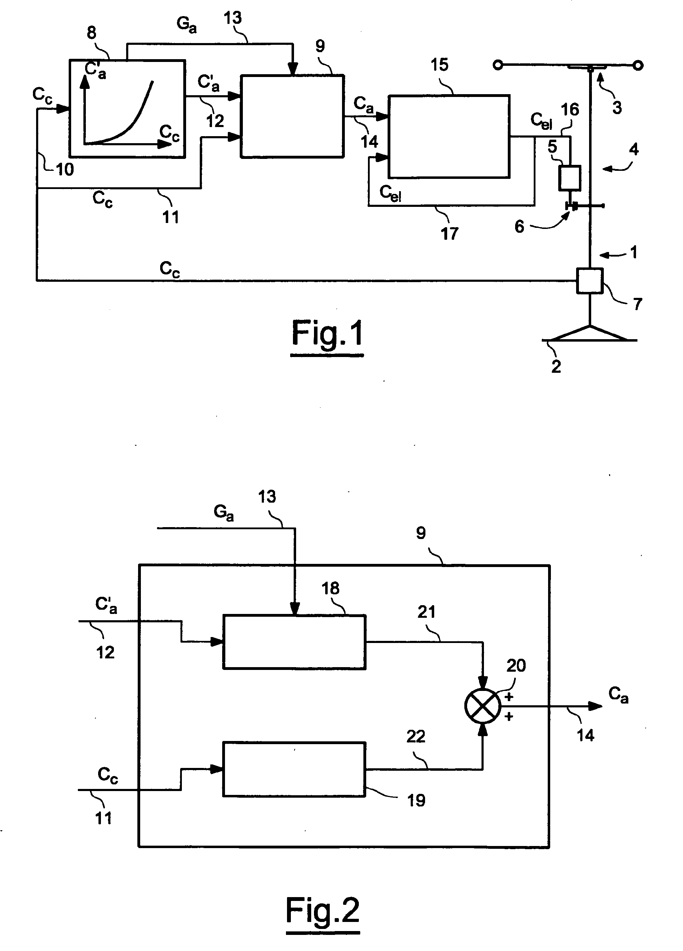

Tel qu'illustré sur la figure 1, un système de direction assistée électrique de véhicule automobile comprend une colonne de direction référencé 1 de manière générale, et pourvue, en une extrémité, d'un volant 2 solidaire en rotation, qui transforme un mouvement de rotation du volant en un mouvement de translation d'un ensemble crémaillère/pignon référencé 3 et connu en soi.

Un actionneur 4, comprenant un moteur électrique 5 générant un couple d'assistance sur la colonne de direction 1 par l'intermédiaire d'un réducteur 6, procure une assistance au braquage des roues directrices du véhicule.

Un capteur 7, de mesure du couple appliquée par le conducteur sur le volant 2, est disposé entre le volant 2 et l'actionneur 4.

Un module d'estimation 8 d'un couple d'assistance initial $C'_a$ prédéterminé en fonction de la mesure du couple $C_c$ appliquée par le conducteur sur le volant 2.

Le capteur 7 de mesure de couple transmet le couple $C_c$ appliqué par le conducteur sur le volant 2 au module d'estimation 8 et à un module d'élaboration 9, respectivement par des connexions 10 et 11.

Le module d'estimation 8 délivre au module d'élaboration 9, d'une part, le couple d'assistance initial prédéterminé $C'_a$ par une connexion 12, et d'autre part, un gain d'assistance prédéterminé $G_a$ par une connexion 13.

Le module d'élaboration 9 élabore un couple d'assistance final $C_a$ de la direction assistée électrique, adapté pour simuler une localisation identique de l'actionneur 4 et du capteur 7 de mesure de couple. En d'autres termes, il s'agit de simuler un positionnement identique sur la colonne de direction de l'actionneur 4 et du capteur de mesure de couple 7.

Le couple d'assistance final $C_a$ est transmis par le module d'élaboration 9, par l'intermédiaire d'une connexion 14, à un module de transformation 15 du couple d'assistance final $C_a$ en une commande $C_{e1}$ correspondante de courant d'alimentation du moteur électrique 5, par l'intermédiaire d'une connexion 16.

Le module de transformation 15 est muni d'une boucle de rétroaction 17 de la sortie sur l'entrée pour transmettre la commande $C_{e1}$.

La figure 2 illustre un mode de réalisation plus détaillé du module d'élaboration 9.

Le module d'élaboration 9 comprend un premier module de filtrage 18, de type passe-bas, un deuxième module de filtrage 19, de type passe-haut, et un module d'addition 20.

Le premier module de filtrage 18 reçoit en entrée le couple d'assistance initiale $C_a$, et le gain d'assistance $G_a$, respectivement par les connexions 12 et 13.

Le deuxième module de filtrage 19 reçoit en entrée le couple $C_c$ appliqué par le conducteur sur le volant et mesuré par le capteur 7, par l'intermédiaire de la connexion 11.

Le module d'addition 20 reçoit en entrée les sorties respectives des premier et deuxième modules de filtrage 18 et 19 par des connexions 21 et 22.

Le module d'addition 20 délivre, en sortie du module d'élaboration 9, le couple d'assistance final $C_a$ par la connexion 14.

Dans un tel système, on observe deux fréquences principales de résonance mécanique.

La première fréquence de résonance est engendrée par la rigidité latérale du train avant de direction, et les inerties du volant et du moteur du véhicule. L'expression de sa pulsation $\omega_{ID.A.E}$ correspondante est la suivante :

$$\omega_{ID.A.E} = \sqrt{\frac{k_0 n_{rk}^{2}}{n_{gb}^{2} J_{mot} + J_{sw}}}$$

dans laquelle :

$k_0$ représente la rigidité transversale du train avant, en N/m ;
$n_{rk}$ représente le rapport de crémaillère, en m/rad ;
$n_{gb}$ représente le rapport de réduction, a dimensionnel ;
$J_{mot}$ représente l'inertie du moteur électrique, en kg.m$^2$ ;et
$J_{sw}$ représente l'inertie du volant, en kg.m$^2$ ;

Il s'agit d'une résonance à basse fréquence, généralement comprise entre 3 Hz et 6 Hz. A de telles fréquences, la raideur du capteur de couple 7 peut être considérée comme infinie.

La deuxième résonance provient de la raideur du capteur de couple 7 et des inerties du volant 2 et du moteur électrique 5. L'expression de la pulsation correspondante $\omega_{2D.A.E}$ est la suivante :

$$\omega_{2D.A.E} = \sqrt{\frac{k_{sen} J_{mot} n_{gb}^{2} J_{s\omega}}{J_{mot} n_{gb}^{2} + J_{s\omega}}}$$

dans laquelle :

$k_{sen}$ représente la raideur du capteur de couple, en Nm/rad.

Cette résonance correspond à une haute fréquence, généralement comprise entre 14 Hz et 20 Hz. La vibration est telle que l'inertie du moteur électrique 5 est en opposition de phase avec l'inertie du volant 2, et la raideur du capteur de couple 7 est comprise entre ces deux inerties.

De manière générale, un système possédant des résonances induites par des éléments mécaniques a pour principal problème de stabilité d'asservissement le problème de localisation identique du capteur de couple 7 et de l'actionneur 4.

Dans un système intégrant un capteur et un actionneur, ces deux éléments sont dits de localisation identique si l'effort appliqué par l'actionneur et la mesure réalisée par le capteur agissent sur la même inertie. Cette localisation identique garantit un comportement en phase du système mécanique (pas de déphasage entre l'entrée et la sortie) annihilant les problèmes de stabilité aux fréquences de résonance.

Pour une direction assistée électrique, le principe de localisation identique de l'actionneur 4 et du capteur 7 n'est pas respecté pour des raisons de coût et d'encombrement.

L'invention permet de simuler une co-localisation par filtrage, de manière à atteindre, aux fréquences de résonance, une phase proche de zéro du diagramme de Bode représentant le fonctionnement du système.

La direction assistée électrique peut être modélisée par le système d'équation suivant, dans lequel la transformée de Laplace a été appliquée (Si f est une fonction localement intégrable, définie sur [0 ; +∞[, on appelle transformée de Laplace de f la fonction :

$$Lf(s) = \int_0^{+\infty} f(t)e^{-st}dt \quad \text{avec } s = x+iy)$$

$$\begin{cases} J_{mot}s^2\theta_{mot} = Kc \times i - \dfrac{k_{gb}q_{gb}}{n_{gb}} \\[2mm] \left(M_{rk} + \dfrac{J_{col}}{n_{rk}^2}\right)s^2 x_{rk} = \dfrac{k_{sen}q_{sen}}{n_{rk}} + Fy - k_0 x_{rk} \\[2mm] q_{sen} = \theta_{sw} - \dfrac{x_{rk}}{n_{rk}} \\[2mm] J_{sw}s^2\theta_{sw} = -k_{sen}q_{sen} + C_c \\[2mm] q_{gb} = -\dfrac{x_{rk}}{n_{rk}} + \dfrac{\theta_{mot}}{n_{gb}} \\[2mm] Fy = \dfrac{k_{gb}q_{gb}}{n_{rk}} \end{cases}$$

dans lequel :

$\theta_{mot}$ représente l'angle moteur, en rad ;
Kc représente une constante de couple du moteur, en Nm/A ;
i représente le courant du moteur, en A ;
$k_{gb}$ représente la raideur du réducteur, en Nm/rad ;
$q_{gb}$ représente le déplacement relatif du réducteur, en rad ;
$M_{rk}$ représente la masse de la crémaillère, en kg ;
$J_{col}$ représente l'inertie de la colonne de direction, en kg.m$^2$ ;
$X_{rk}$ représente le déplacement de la crémaillère, en m;
$q_{sen}$ représente le déplacement relatif du capteur de couple, en rad ;
Fy représente l'effort d'assistance, en N ;
$\theta_{sw}$ représente l'angle de rotation du volant, en rad ; et
$C_c$ représente le couple appliqué par le conducteur sur le volant, en Nm.

Les équations précédentes permettent de déterminer la fonction de transfert $OL_{dae}$ existant entre le courant d'alimentation du moteur électrique 5 et le couple $C_c$ appliqué par le conducteur sur le volant 2 :

$$OL_{dae} = -\frac{k_{sen}J_{sw}s^2 n_{gb}Kc}{n_{gb}^2 J_{mot}s^4 J_{sw} + (k_{sen}n_{gb}^2 J_{mot} + k_{sen}J_{sw} + n_{rk}^2 k_0 J_{sw})s^2 + n_{rk}^2 k_0 k_{sen}}$$

Compte tenu de la fonction de transfert obtenue, on utilise un filtrage de type passe-bas, mis en oeuvre par le premier module de filtrage 18, à la première fréquence de résonance, permettant d'appliquer un retard de phase sensiblement égal à $\pi/4$ radian ou 45°. La fonction de transfert du premier module de filtrage 18 est la suivante :

$$\frac{G_a}{1 + s/\omega_{passe-bas}}$$

dans laquelle le gain d'assistance $G_a$ est celui fourni par la loi d'assistance prédéterminée du module d'estimation 8. En outre, on définit la pulsation $\omega_{passe-bas}$ par l'équation suivante :

$$\omega_{passe-bas} = \frac{\omega_{1DAE}}{2\xi} \sqrt{\frac{1}{1 + \dfrac{G_a J_{sw}}{J_{sw} + n_{gb}{}^2 J_{mot}}}}$$

dans laquelle :

$\xi$ représente le coefficient d'amortissement réduit, adimensionnel.

L'amortissement de la première résonance avec un coefficient d'amortissement $\xi$ prédéterminé est garanti. L'expression de la pulsation $\omega_{passe-bas}$ est déterminée en calculant la fonction de transfert en boucle fermée entre le couple d'assistance et le couple couple conducteur puis en développant en série de Taylor cette dernière au voisinage de la première fréquence de résonance. La condition d'amortissement fournit la pulsation $\omega_{passe-bas}$ du premier module de filtrage passe-bas 18.

Elle est explicitement donnée en fonction des paramètres physiques du moteur électrique 5, de la rigidité apparente du train avant, du rapport de crémaillère de direction, de l'amortissement désiré et du gain d'assistance $G_a$. Elle est donc non stationnaire en fonction du point de fonctionnement de la loi d'assistance, point fixant la valeur du gain d'assistance $G_a$.

En revanche, à la deuxième fréquence de résonance, de haute fréquence, le deuxième module de filtrage 19 effectue un filtrage de type passe-haut pour appliquer une avance de phase sensiblement égale à $\pi/4$ radian ou 45° à la deuxième fréquence de résonance mécanique du système.

La fonction de transfert du deuxième module de filtrage 19 est la suivante :

$$\frac{s \times Kv}{1 + s / \omega_{passe-haut}}$$

dans laquelle :

Kv représente le gain de l'avance de phase, en A/s.

Le gain Kv et la pulsation $\omega_{passe-haut}$ sont définis par les expressions suivantes :

$$\begin{cases} Kv = \dfrac{2(1+\sqrt{3})\sqrt{3}}{3\sqrt{3} + 2\sqrt{3}} \dfrac{n_{gb}}{\omega_{2DAE}} \\[4mm] \omega_{passe-haut} = \sqrt{3}\sqrt{3 + 2\sqrt{3}}\,\omega_{2DAE} \end{cases}$$

Le système, en boucle fermée, amortit la deuxième résonance avec un secteur d'amortissement proche de $1/\sqrt{2}$. Le gain $K_v$ et la pulsation $\omega_{passe-haut}$ de coupure du deuxième module de filtrage 19, de type passe-haut, ne dépendent pas du gain d'assistance $G_a$, mais uniquement de paramètres physiques de la direction assistée électrique.

Aussi, la stratégie de commande globale du module d'élaboration 9 a pour fonction de transfert :

$$\frac{C_a}{C_c} = \left( \frac{Kv \times s}{(1 + s/\omega_{passe-haut})} + \frac{G_a}{(1 + s/\omega_{passe-bas})} \right)$$

Les deux modules de filtrage 18 et 19 mettent en oeuvre des filtrages de premier ordre, faciles à mettre en oeuvre, et donc de coût réduit.

## Revendications

1. Système de direction assistée électrique de véhicule automobile, comprenant un actionneur (4) de crémaillère (3) et un capteur (7) de mesure du couple appliqué par le conducteur sur le volant (2), disposés sur la colonne de direction (1), respectivement entre le volant (2) et la crémaillère (3), et entre l'actionneur (4) et le volant (2), comprenant des moyens d'élaboration (9) d'un couple d'assistance final de la direction assistée électrique adapté pour simuler une localisation identique de l'actionneur (4) de crémaillère (3) et du capteur (7) de mesure de couple sur la colonne de direction (1), de façon qu'aux deux fréquences principales de résonance mécanique du système, la phase du diagramme de Bode représentant le fonctionnement du système est sensiblement nulle, caractérisé en ce que lesdits moyens d'élaboration (9) comprennent des premiers moyens de filtrage (18) du couple d'assistance initial en fonction du gain d'assistance, et des deuxièmes moyens de filtrage (19) de la mesure du couple appliqué par le conducteur sur le volant (2), et en ce qu'il comprend des moyens d'estimation (8) d'un couple d'assistance initial prédéterminé et d'un gain d'assistance prédéterminé, en fonction de la mesure du couple appliqué par le conducteur sur le volant (2).

2. Système selon la revendication 1, dans lequel lesdits moyens d'élaboration (9) comprennent des moyens d'addition (20) des signaux de sortie des premiers et deuxièmes moyens de filtrage (18, 19), pour délivrer ledit couple d'assistance final en sortie desdits moyens d'élaboration (9).

3. Système selon l'une des revendications précédentes, dans lequel ledit actionneur (4) comprend un moteur électrique (5), et dans lequel ledit système comprend, en outre, des moyens de transformation (15) dudit couple d'assistance final en une commande correspondante de courant d'alimentation du moteur électrique (5).

4. Système selon l'une des revendications précédentes, dans lequel lesdits premiers moyens de filtrage (18) de type passe-bas sont adaptés pour appliquer un retard de phase de sensiblement π/4 radian à la première fréquence principale de résonance mécanique du système.

5. Système selon l'une des revendications précédentes, dans lequel lesdits deuxièmes moyens de filtrage (19) de type passe-haut sont adaptés pour appliquer une avance de phase de sensiblement π/4 radian à la deuxième fréquence principale de résonance mécanique du système.

6. Procédé de gestion d'une direction assistée électrique de véhicule automobile, de façon que l'on élabore un couple d'assistance final de la direction assistée électrique adapté pour simuler une localisation identique d'un actionneur (4) de crémaillère (3) et d'un capteur (7) de mesure de couple disposés sur la colonne de direction (1), **caractérisé en ce qu'**aux deux fréquences principales de résonance mécanique du système, la phase du diagramme de Bode représentant le fonctionnement du système est sensiblement nulle par filtrage du couple d'assistance initial en fonction du gain d'assistance, et par filtrage de la mesure du couple appliqué par le conducteur sur le volant.

## Claims

1. Electrical power-steering system for a motor vehicle, comprising a steering-rack (3) actuator (4) and a sensor (7) measuring the torque applied by the driver to the steering wheel (2), said actuator and sensor being located on the steering column (1) between the steering wheel (2) and the steering rack (3), and between the actuator (4) and the steering wheel (2), respectively, said system comprising elaboration means (9) for elaborating a final assist torque for the electrical power-steering designed to simulate an identical location of the steering-rack (3) actuator (4) and of the torque measurement sensor (7) on the steering column (1), such that at the two main mechanical resonant frequencies of the system the phase of the Bode diagram representing the system operation is approximately zero, **characterized in that** said elaboration means (9) comprise first filtering means (18) for filtering the initial assist torque as a function of the assist gain and second filtering means (19) for filtering the measurement of the torque applied by the driver to the steering wheel (2), and **in that** it comprises means (8) for estimating a predetermined initial assist torque and a predetermined assist gain, depending on the measurement of the torque applied by the driver to the steering wheel (2).

2. System according to Claim 1, in which said elaboration means (9) comprise means (20) for adding the output signals from the first and second filtering means (18, 19), in order to deliver said final assist torque at the output of said elaboration means (9).

3. System according to either of the preceding claims, in which said actuator (4) comprises an electric motor (5) and in which said system furthermore comprises means (15) for converting said final assist torque into a corresponding command for the current supplied to the electric motor (5).

4. System according to one of the preceding claims, in which said first filtering means (18) of the lowpass type are suitable for applying a phase-delay of approximately $\pi/4$ radians to the first main mechanical resonant frequency of the system.

5. System according to one of the preceding claims, in which said second filtering means (19) of the highpass type are suitable for applying a phase-lead of approximately $\pi/4$ radians to the second main mechanical resonant frequency of the system.

6. Method for managing electrical power-steering of a motor vehicle, such that a final assist torque of the electrical power-steering is developed that is suitable for simulating an identical location of a steering-rack (3) actuator (4) and of a torque measurement sensor (7) positioned on the steering column (1), **characterized in that** at the two main mechanical resonant frequencies of the system the phase of the Bode diagram representing the system operation is approximately zero, by filtering the initial assist torque depending on the assist gain and by filtering the measurement of the torque applied by the driver to the steering wheel.

## Patentansprüche

1. Elektrisches Servolenkungssystem eines Kraftfahrzeugs, das ein Stellglied (4) einer Zahnstange (3) und einen Sensor (7) zur Messung des vom Fahrer auf das Lenkrad (2) ausgeübten Drehmoments enthält, die auf der Lenksäule (1) zwischen dem Lenkrad (2) und der Zahnstange (3) bzw. zwischen dem Stellglied (4) und dem Lenkrad (2) angeordnet sind, das Einrichtungen zur Ausarbeitung (9) eines End-Servodrehmoments der elektrischen Servolenkung enthält, das geeignet ist, um eine identische Lokalisierung des Stellglieds (4) der Zahnstange (3) und des Sensors (7) zur Messung des Drehmoments auf der Lenksäule (1) zu simulieren, damit bei den zwei Hauptfrequenzen der mechanischen Resonanz des Systems die Phase des Bode-Diagramms, die den Betrieb des Systems darstellt, im Wesentlichen Null ist, **dadurch gekennzeichnet, dass** die Ausarbeitungseinrichtungen (9) erste Filtereinrichtungen (18) des Anfangs-Servodrehmoments abhängig von der Servoverstärkung und zweite Filtereinrichtungen (19) der Messung des vom Fahrer auf das Lenkrad (2) ausgeübten Drehmoments enthalten, und dass es Einrichtungen zur Schätzung (8) eines Vorbestimmten Anfangs-Servodrehmoments und einer Vorbestimmten Servoverstärkung abhängig von der Messung des vom Fahrer auf das Lenkrad (2) ausgeübten Drehmoments enthält.

2. System nach Anspruch 1, bei dem die Ausarbeitungseinrichtungen (9) Addiereinrichtungen (20) der Ausgangssignale der ersten und zweiten Filtereinrichtungen (18, 19) enthalten, um das End-Servodrehmoment am Ausgang der Ausarbeitungseinrichtungen (9) zu liefern.

3. System nach einem der vorhergehenden Ansprüche, bei dem das Stellglied (4) einen Elektromotor (5) enthält, und bei dem das System außerdem Umwandlungseinrichtungen (15) des End-Servodrehmoments in eine entsprechende Speisestromsteuerung des Elektromotors (5) enthält.

4. System nach einem der vorhergehenden Ansprüche, bei dem die ersten Filtereinrichtungen (18) vom Tiefpass-Typ geeignet sind, um eine Phasenverzögerung von im Wesentlichen $\pi/4$ Radiant an die erste Hauptfrequenz der mechanischen Resonanz des Systems anzuwenden.

5. System nach einem der vorhergehenden Ansprüche, bei dem die zweiten Filtereinrichtungen (19) vom Hochpass-Typ geeignet sind, um eine Phasenvoreilung von im Wesentlichen π/4 Radiant an die zweite Hauptfrequenz der mechanischen Resonanz des Systems anzuwenden.

**6.** Verfahren zur Verwaltung einer elektrischen Servolenkung eines Kraftfahrzeugs, derart, dass ein End-Servodrehmoment der elektrischen Servolenkung ausgearbeitet wird, das geeignet ist, um eine identische Lokalisierung eines Stellglieds (4) einer Zahnstange (3) und eines Sensors (7) zur Drehmomentmessung zu simulieren, die auf der Lenksäule (1) angeordnet sind, **dadurch gekennzeichnet, dass** bei den zwei Hauptfrequenzen der mechanischen Resonanz des Systems die Phase des Bode-Diagramms, die den Betrieb des Systems darstellt, im Wesentlichen Null ist durch Filterung des Anfangs-Servodrehmoments abhängig von der Servoverstärkung und durch Filterung der Messung des vom Fahrer an das Lenkrad angewendeten Drehmoments.

## Fig.1

## Fig.2

**RÉFÉRENCES CITÉES DANS LA DESCRIPTION**

**Documents brevets cités dans la description**

- FR 2814423

- WO 2005085041 A